# EUROPÄISCHE PATENTANMELDUNG

(11) **EP 3 808 561 A1**
(43) Veröffentlichungstag der Anmeldung: **21.04.2021**
(21) Anmeldenummer: 19203777.8
(22) Anmeldetag: 17.10.2019
(51) Int. Cl.: B32B 27/20, B32B 7/12, B32B 15/082, B32B 15/085, B32B 15/20, B32B 27/08, B32B 27/30, B32B 27/32, B65D 43/02, B65D 77/20, C08K 3/34, C08L 23/06, C08L 23/08, C08L 23/14

(54) **VERBUNDFOLIE**

(71) Anmelder: Constantia Teich GmbH, 3205 Weinburg (AT)
(72) Erfinder: Wegenberger, Alfred, 3550 Langenlois (AT); Steiner, Matthias, 3205 Weinburg (AT); Feichtinger, Roland, 3200 Ober-Grafendorf (AT); Relota, Patrick, 3200 Ober-Grafendorf (AT)
(74) Vertreter: Patentanwälte Pinter & Weiss OG

(57) **Zusammenfassung**

Verbundfolie (1) zur Herstellung von Deckelplatinen mit einer Aluminiumlage (2) und einer auf die Aluminiumlage (2) mehrlagig durch Coextrusion aufextrudierte Extrusionsschicht (3). Die Extrusionsschicht (3) weist eine Siegelschicht (6) und eine zwischen der Siegelschicht (6) und der Aluminiumlage (2) angeordnete Haftvermittlerschicht (5) auf. Die Siegelschicht weist (6) eine Polymermatrix mit zumindest einem ersten Polymerbestandteil und einem zweiten Polymerbestandteil auf, wobei der Polymermatrix der Siegelschicht (6) ein Peelkraft-Additiv, insbesondere ein mineralischer Füllstoff, wie etwa Talk, zugesetzt ist. Der erste Polymerbestandteil ist ausgewählt aus einem Polyolefin und der zweite Polymerbestandteil ist ausgewählt aus Polyolefin-Plastomeren und/oder Polyolefin-Elastomeren mit jeweils einer Dichte von unter 900 kg/m³ sowie Kombinationen solcher Materialien.

## Beschreibung

Die gegenständliche Offenbarung betrifft eine Verbundfolie, eine Deckelplatine und ein Verfahren zur Herstellung einer Verbundfolie.

Zum Verschließen von Verpackungsbehältern, insbesondere im Nahrungsmittelbereich und im Bereich der Tiernahrungsmittel, werden sogenannte Deckelplatinen verwendet, die auf den Rand eines Verpackungsbehälters aufgesiegelt werden, um diesen zu verschließen. Zu Beispielen solcher Verpackungsbehälter zählen etwa Joghurtbecher, Trays oder ähnliche Behälter.

Insbesondere aufgrund der guten Verarbeitbarkeit, der vorteilhaften Barriereeigenschaften und der Wiederverwertbarkeit werden die Deckelplatinen häufig aus Aluminiumfolien hergestellt, die gegebenenfalls bedruckt, lackiert und/oder geprägt und auf der Siegelseite mit einem Siegelmaterial beschichtet sind. Je nach Ausführungsform werden als Siegelmaterial beispielsweise aufkaschierte Siegelfolien, Siegellacke, Extrusionsbeschichtungen oder Kombinationen dieser Techniken verwendet. Die auf die Aluminiumfolie aufgebrachten Schichten dienen dabei oftmals nicht nur zur Gewährleistung der Siegelbarkeit, sondern verleihen der Deckelplatine gegebenenfalls auch strukturelle Eigenschaften, wie etwa einen verbesserten Durchstoßwiderstand, eine vorteilhafteres Einreißverhalten, einen hohen Berstdruck oder ähnliches.

DE 10253110 B4 offenbart beispielsweise eine Deckelplatine mit einer Aluminiumschicht, die mit einer zumindest dreilagigen Coextrusionsbeschichtung beschichtet wird.

Da von der Platine nur der Aluminiumanteil problemlos wiederverwertbar ist, besteht ein Interesse daran, den Anteil der als Siegelschicht aufgebrachten Materialien zu verringern. Dem stehen jedoch technische Anforderungen entgegen. Einerseits muss nämlich die Siegellage stark genug sein, um eine ausreichend gute Siegelhaftung zu erzeugen, andererseits soll die Siegellage ein gutes Peelverhalten haben, d.h. es muss für den Konsumenten ohne übermäßigen Kraftaufwand (und ohne die Deckelplatine einzureißen) möglich sein, die Deckelplatine von dem Verpackungsbehälter abzuziehen. Zusätzlich ist zu berücksichtigen, dass die Siegelschicht für das zu verpackende Gut, beispielsweise Lebensmittel, geeignet ist. Um das Peelverhalten zu verbessern, kann dem Material der Siegellage ein Peelkraft-Additiv, insbesondere ein mineralischer Füllstoff, wie etwa Talk, zugesetzt sein. Der mineralische Füllstoff verschlechtert jedoch die Verarbeitbarkeit des Polymermaterials und führen zu Problemen beim Extrudieren. Daher müssen entsprechende Siegelschichten mit relativ hohen Schichtdicken extrudiert werden.

Die gegenständliche Offenbarung hat unter anderem das Ziel, Aluminiumplatinen mit einer besseren Rezyklierbarkeit bereitzustellen, mit denen der Kunststoffanteil verringert werden kann.

In einem ersten Aspekt betrifft die gegenständliche Offenbarung eine Verbundfolie, insbesondere zur Herstellung von Deckelplatinen, mit einer Aluminiumlage und einer auf die Aluminiumlage mehrlagig durch Coextrusion aufextrudierten Extrusionsschicht, wobei die Extrusionsschicht eine Siegelschicht und eine zwischen der Siegelschicht und der Aluminiumlage angeordnete Haftvermittlerschicht aufweist, wobei die Siegelschicht eine Polymermatrix mit zumindest einem ersten Polymerbestandteil und einem zweiten Polymerbestandteil aufweist, wobei der Polymermatrix der Siegelschicht ein Peelkraft-Additiv, insbesondere ein mineralischer Füllstoff wie etwa Talk, zugesetzt ist, wobei der erste Polymerbestandteil ausgewählt ist aus einem Polyolefin und wobei der zweite Polymerbestandteil ausgewählt ist aus Polyolefin-Plastomeren und/oder Polyolefin-Elastomeren mit einer Dichte von jeweils unter 900 kg/m³ sowie Kombinationen solcher Materialien. Die Extrusionsschicht kann damit besonders dünn hergestellt werden, wobei weiterhin bei der Herstellung hohe Liniengeschwindigkeit erreicht werden können. Dabei können Liniengeschwindigkeiten von etwa 400 m/min oder auch mehr gefahren werden, ohne dass im Schmelzfilm der Extrusionsschicht Fehler oder Löcher entstehen würden. Dies ist ein unerwarteter Effekt, da die Zugabe von Peelkraft-Additiven üblicherweise die Schmelzefestigkeit derart reduziert, dass die entsprechenden Extrusionslagen entweder dicker ausgeführt werden müssen, oder dass die Liniengeschwindigkeit heruntergesetzt werden muss. Durch die Zugabe des zweiten Polymerbestandteils lässt sich überraschender Weise die Dicke der Extrusionsschicht bei gleichbleibend hoher Liniengeschwindigkeit erheblich reduzieren. Gleichzeitig lässt sich eine gute und konstante Siegelnahtfestigkeit erzielen.

In vorteilhafter Weise kann der erste Polymerbestandteil aus einem Polyolefin ausgewählt sein und insbesondere Low-Density-Polyethylen sein, wobei der Anteil des ersten Polymerbestandteils an der Polymermatrix vorzugsweise zwischen etwa 30 und etwa 70 Gew.-% betragen kann. Durch den ersten Polymerbestandteil kann insbesondere die Schmelzeviskosität auf einen vorteilhaften Wert eingestellt werden.

In einer vorteilhaften Ausführungsform kann der Anteil des zweiten Polymerbestandteils an der Polymermatrix zwischen 30 und 70 Gew.-% betragen. Durch eine Auswahl des Anteils des zweiten Polymerbestandteils kann insbesondere die Siegelnahtfestigkeit und der Berstdruck der aus der Verbundfolie hergestellten Deckelplatine gezielt vorteilhaft beeinflusst werden.

In einer weiteren vorteilhaften Ausführungsform kann die Aluminiumlage aus einer bevorzugt weichen oder halbharten Aluminiumfolie mit einer Dicke von 10 µm bis 70 µm, insbesondere von 20 bis 38 µm gebildet sein. Dies bietet sehr gute Barriereeigenschaften und erlaubt die Herstellung von Platinen, die die vom Kunden gewohnten und gewünschten Eigenschaften, wie etwa Haptik, Aussehen, Peelverhalten, etc. aufweisen.

In vorteilhafter Weise kann die Extrusionsschicht eine Gesamtdicke von 10 bis 18 g/m², insbesondere zwischen 10 und 15 g/m² aufweisen, wobei die Dicke der Haftvermittlerschicht vorzugsweise zwischen 3 und 5 g/m² beträgt und wobei die Dicke der Siegelschicht vorzugsweise zwischen 6 und 10 g/m² beträgt. Durch diese sehr dünne Beschichtung kann das Verhältnis von Polymerbestandteilen zu Aluminium in der Verbundfolie auf einen sehr geringen Wert eingestellt werden, sodass mit der Verbundfolie Grenzwerte unterschritten werden können, welche die Rezyklierbarkeit der Verbundfolie definieren.

Gegebenenfalls kann die Extrusionsschicht eine an die Siegelschicht angrenzende, außenliegende Deckschicht aufweisen, die vorzugsweise eine Dicke zwischen 1 und 3 g/m² aufweist. Die Deckschicht ist ausreichend dünn, um die Funktionalität der Siegelschicht zumindest negativ nicht wesentlich zu beeinträchtigen. Gegebenenfalls kann die Deckschicht der Oberfläche auch positive Eigenschaften verleihen, zum Beispiel indem sie die Hot-Tack-Eigenschaften verbessert. Die Deckschicht bietet insbesondere verfahrenstechnische Vorteile bei der Herstellung der Verbundfolie, da Ablagerungen des Peelkraft-Additivs an den Extrusionsdüsen vermieden werden.

Der zweite Polymerbestandteil kann vorzugsweise Polymerkomponenten aufweisen, die ausgewählt sind aus Ethylen/Propylen-Copolymer, insbesondere semikristallinem Ethylen-Propylen-Copolymer, welches vorzugsweise im Wesentlichen frei von Dienen ist, Alpha-Olefin-Copolymer, insbesondere Ethylen/Alpha-Olefin-Copolymer und/oder Propylen/Alpha-Olefin-Copolymer, Ethylen-Propylen-Dien-Elastomer, sowie Kombinationen solcher Stoffe.

Die gegenständliche Offenbarung betrifft weiters eine Deckelplatine zum Verschließen eines Verpackungsbehälters, wobei die Deckelplatine aus einer zuvor beschriebenen Verbundfolie, vorzugsweise durch Ausstanzen oder Ausschneiden, hergestellt ist.

Weiters betrifft die gegenständliche Offenbarung ein Verfahren zur Herstellung einer Verbundfolie, insbesondere zur Herstellung von Deckelplatinen, wobei das Verfahren die folgenden Schritte aufweist: Bereitstellen einer Aluminiumlage und Aufextrudieren auf die Aluminiumlage einer mehrlagigen Extrusionsschicht umfassend eine an die Aluminiumlage angrenzende Haftvermittlerschicht und eine an die Haftvermittlerschicht angrenzende Siegelschicht, wobei die Siegelschicht eine Polymermatrix mit zumindest einem ersten Polymerbestandteil und einem zweiten Polymerbestandteil aufweist, wobei der Polymermatrix der Siegelschicht ein Peelkraft-Additiv, insbesondere ein mineralischer Füllstoff wie etwa Talk, zugesetzt ist, wobei der erste Polymerbestandteil ausgewählt wird aus einem Polyolefin und wobei der zweite Polymerbestandteil ausgewählt wird aus Polyolefin-Plastomeren und/oder Polyolefin-Elastomeren mit einer Dichte von jeweils unter 900 kg/m³ sowie Kombinationen solcher Materialien.

In einer vorteilhaften Ausführungsform kann der erste Polymerbestandteil aus einem Polyolefin ausgewählt sein und insbesondere Low-Density-Polyethylen sein, wobei der Anteil des ersten Polymerbestandteils an der Polymermatrix vorzugsweise zwischen etwa 30 und etwa 70 Gew.-% beträgt.

In vorteilhafter Weise kann der Anteil des zweiten Polymerbestandteils an der Polymermatrix zwischen 30 und 70 Gew.-% betragen.

Die Aluminiumlage kann in vorteilhafter Weise aus einer bevorzugt weichen oder halbharten Aluminiumfolie mit einer Dicke von 10 µm bis 70 µm, insbesondere von 20 bis 38 µm gebildet sein.

In einer vorteilhaften Ausführungsform kann die Extrusionsschicht eine Gesamtdicke von 10 bis 18 g/m², insbesondere zwischen 10 und 15 g/m² aufweisen, wobei die Dicke der Haftvermittlerschicht vorzugsweise zwischen 3 und 5 g/m² beträgt und wobei die Dicke der Siegelschicht vorzugsweise zwischen 6 und 10 g/m² beträgt.

Gegebenenfalls kann die Extrusionsschicht eine an die Siegelschicht angrenzende, außenliegende Deckschicht aufweisen, die vorzugsweise eine Dicke zwischen 1 und 3 g/m² aufweisen kann.

Die gegenständliche Offenbarung betrifft weiters ein Verfahren zur Herstellung einer Deckelplatine zum Verschließen eines Verpackungsbehälters, wobei die Deckelplatine vorzugsweise durch Ausstanzen oder Ausschneiden aus einer Verbundfolie hergestellt wird, welche mit einem hierein beschriebenen Verfahren hergestellt wurde.

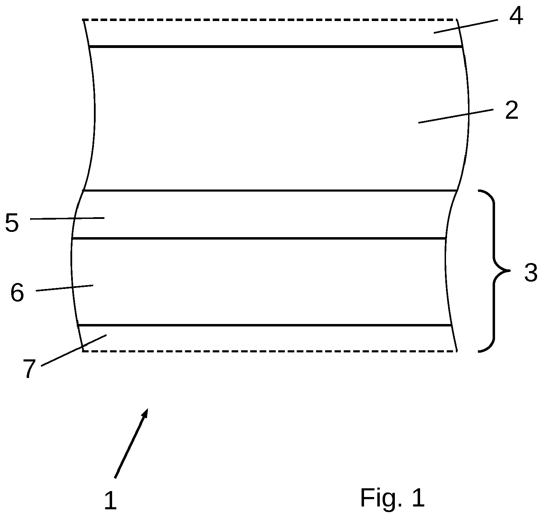

Die gegenständliche Erfindung wird nachfolgend unter Bezugnahme auf Figur 1 näher erläutert, die beispielhaft, schematisch und nicht einschränkend eine vorteilhafte Ausgestaltung der Erfindung zeigt.

Fig.1 zeigt dabei einen Schichtaufbau einer Deckelplatine.

Die in Fig. 1 in einem Querschnitt schematisch dargestellte Verbundfolie 1 zur Herstellung einer Deckelplatine weist im Wesentlichen eine Aluminiumlage 2 auf, die an ihrer dem Produkt zugewandten Seite mit einer mehrlagigen Extrusionsschicht 3 beschichtet ist. Gegebenenfalls kann auf der dem Produkt abgewandten Seite der Aluminiumlage 2 eine Primerschicht 4 für eine Bedruckung vorgesehen sein. Die Darstellung der Fig. 1 ist rein schematisch und nicht maßstäblich. Sie repräsentiert daher insbesondere nicht die tatsächlichen Dickenverhältnisse.

Die Extrusionsschicht 3 wird in einem Arbeitsgang als Coextrudat auf die Aluminiumlage 2 aufgebracht und weist eine Haftvermittlerschicht 5 und eine peelbare Siegelschicht 6 auf. Gegebenenfalls kann zusätzlich eine dünne Deckschicht 7 über der Siegelschicht vorgesehen sein. Die Extrusionsschicht 3 weist vorzugsweise eine Gesamtdicke von zwischen 10 und 18 g/m² und bevorzugt zwischen 10 und 15 g/m² auf.

Die Aluminiumlage 2 besteht aus einer bevorzugt weichen oder halbharten Aluminiumfolie und weist eine bevorzugte Dicke von etwa 20 bis etwa 38 µm auf. Gegebenenfalls kann die Dicke auch darüber oder darunter liegen, wenn dies für die spezifische Anwendung gewünscht oder notwendig ist. Üblicherweise werden für Deckelplatinen Aluminiumlagen mit Dicken von beispielsweise zwischen 10 µm und 70 µm verwendet. Die Aluminiumlage 2 dient als Substrat, auf das in einem Coextrusionsverfahren die Lagen der Extrusionsschicht 3 aufgebracht werden.

Die Haftvermittlerschicht 5 verbessert die Haftung zwischen der Siegelschicht 6 und der Aluminiumlage 2, wobei im Stand der Technik zahlreiche Materialien bekannt sind, die zur Herstellung der Haftvermittlerschicht 5 verwendet werden können. Beispielsweise kann das Material der Haftvermittlerschicht 5 ausgewählt sein aus Ethylen-Acrylsäure-Copolymer (EAA), Ethylen-Metacrylsäure (EMAA), Maleinsäure-Anhydrid modifiziertes LDPE (PE-g-MAOH), Terpolymer (z.B. Lotader™ von Arkema) vergleichbaren Materialien, die im Fachbereich für diesen Zweck als geeignet erscheinen oder Kombinationen dieser Materialien.

Die Haftvermittlerschicht 5 kann vorzugsweise mit einer Schichtdicke zwischen 3 und 5 g/m² extrudiert werden. Die tatsächlich erforderliche Schichtdicke wird üblicherweise gemäß Herstellerangaben gewählt. Die Auswahl der Schichtdicke der Haftvermittlerschicht kann beispielsweise nach den folgenden Kriterien erfolgen. Die Schichtstärke wird so dünn wie möglich ausgewählt, weil bei insgesamt dünner Beschichtung (es ist ein maximale Gesamtdicke von 18 g bevorzugt) eine für die Siegelung ausreichend dicke Siegelschicht benötigt wird und auch aus Kostengründen, weil die o.a. genannten Materialien meist teurer sind als die für die Siegelschicht verwendeten Materialien. Die Haftvermittlerschicht muss aber dick genug sein, dass eine durchgängig homogene Schicht gegeben bleibt, um eine ausreichend gute Haftung der Extrusionsbeschichtung an der Aluminiumfolie zu gewährleisten.

Die Siegelschicht 6 weist eine Polymermatrix auf, der mit einem Anteil von zwischen 10 und 35 Gew.-% ein Peelkraft-Additiv zugesetzt ist. Die Siegelschicht 6 kann vorzugsweise mit einer Schichtdicke zwischen 6 und 12 g/m² extrudiert werden. Um eine bessere Rezyklierbarkeit der Verbundfolie zu erzielen, ist es sinnvoll, die Dicke der Extrusionsschicht, und dabei insbesondere die Dicke der Siegelschicht 6 zu minimieren. Die Siegelschicht 6 soll dabei so dünn wie möglich sein, wobei sie dennoch die erforderliche Siegelnahtfestigkeit und Peeleigenschaften gewährleisten soll. Eine weitere technische Einschränkung ist die Herstellbarkeit der Extrusionsschicht 3, da sich bei einer zu geringen Schichtdicke Löcher und andere Fehler in der Extrusionsschicht 3 bilden können. Die Minimierung der Dicke der Extrusionsschicht liegt bei Kenntnis der hierin offenbarten Lehren im Können des Durchschnittsfachmanns.

Das Peelkraft-Additiv kann insbesondere ein mineralischer Füllstoff sein, der vorzugsweise lebensmittelverträglich ist. Vorzugsweise kann das Peelkraft-Additiv ausgewählt sein aus Talkum bzw. Talk, CaCO₃, Kreide, Silikaten (zum Beispiel Glimmer, Kaolin), anderen mineralischen Füllstoffen oder Kombinationen dieser Materialien. Das Peelkraft-Additiv kann vorzugsweise eine Korngröße aufweisen, welche auch bei der gegebenen dünnen Siegelschicht diese nicht oder nur vernachlässigbar beeinträchtigt. Insbesondere sollte die Korngröße D98 ("Top-Cut") beispielsweise unter 20 µm betragen.

Die Polymermatrix der Siegelschicht 6 weist zumindest zwei unterschiedliche Polymerbestandteile auf, die hierin als "erster Polymerbestandteil" und "zweiter Polymerbestandteil" bezeichnet werden. Gegebenenfalls können auch weitere Polymerbestandteile vorhanden sein. Die gewählten Bezeichnungen dienen rein der Unterscheidbarkeit und sind nicht einschränkend auszulegen.

Der erste Polymerbestandteil ist ein Polyolefin, insbesondere Polyethylen geringer Dichte (LDPE). Der Anteil des ersten Polymerbestandteils an der Polymermatrix beträgt zwischen etwa 30 und etwa 70 Gew.-%.

Der erste Polymerbestandteil dient als "Basismaterial" der Siegelschicht 6 und beeinflusst nicht nur die Materialkosten, sondern auch die grundlegenden Parameter, die für die Verarbeitbarkeit berücksichtigt werden müssen, wie etwa die Schmelzeviskosität, die Ausziehfähigkeit bzw. Schmelzefestigkeit und die Schmelzefilmstabilität der Polymermatrix bzw. der Siegelschicht 6 während des Extrudierens. Durch eine Veränderung des Anteils des ersten Polymerbestandteils kann insbesondere die Schmelzeviskosität der Polymermatrix verändert werden. Eine vorteilhafte Schmelzeviskosität der Polymermatrix liegt bei einem Schmelzflussindex (MFI-Wert) in einem Bereich zwischen etwa 2 und etwa 15 g/10 min.

Der zweite Polymerbestandteil ist ausgewählt aus Polyolefin-Plastomeren und/oder Polyolefin-Elastomeren mit jeweils einer Dichte von unter 900 kg/m³. Der Anteil des zweiten Polymerbestandteils an der Polymermatrix beträgt zwischen etwa 10 und etwa 40 Gew.-%.

Als "Polyolefin-Plastomere und Polyolefin-Elastomere" werden im Zusammenhang mit der gegenständlichen Offenbarung Copolymere auf Basis von Polyolefinen bezeichnet, die gegenüber den entsprechenden Homopolymeren eine geringere Dichte (von unter 900 kg/m³) und eine erhöhte Elastizität aufweisen. Zu Beispielen von Polyolefin-Plastomeren und/oder Polyolefin-Elastomeren zählen, ohne darauf beschränkt zu sein, Ethylen/Propylen-Copolymere, insbesondere Copolymere mit Propylen und einem geringen Anteil Ethylen, Ethylen/Alpha-Olefin-Copolymere, Propylen/Alpha-Olefin-Copolymere, Ethylen-Propylen-Dien-Elastomere, sowie Kombinationen solcher Stoffe. Polyolefin-Plastomere und Polyolefin-Elastomere kombinieren die Eigenschaften von Elastomeren (d.h. formfesten, aber elastisch verformbaren Stoffen) mit den Vorteilen anderer Kunststoffe, etwa deren Verarbeitbarkeit.

In der Fachliteratur wird mitunter eine Abgrenzung zwischen Polyolefin-Plastomeren und Polyolefin-Elastomeren vorgenommen, wobei im Allgemeinen derartige Materialien mit einer Dichte von 885 kg/m³ bis 900 kg/m³ als Polyolefin-Plastomere bezeichnet werden, und bei einer besonders geringen Dichte, also etwa bei einer Dichte von weniger als 885 kg/m³, die Bezeichnung Polyolefin-Elastomer bevorzugt verwendet wird. Diese Abgrenzung wird jedoch nicht immer einheitlich verwendet. Im Zusammenhang mit der gegenständlichen Offenbarung wird daher für alle diese Polymere der Verständlichkeit halber einheitlich die Bezeichnung "Polyolefin-Plastomere und/oder Polyolefin-Elastomeren" verwendet. Dieser Begriff, so wie er hierin verwendet wird, umfasst somit sowohl Stoffe, die im Fachbereich als Polyolefin-Plastomere bezeichnet werden, als auch Stoffe, die als Polyolefin-Elastomere bezeichnet werden.

Polyolefin-Plastomere und Polyolefin-Elastomere zeichnen sich allgemein aus durch eine hohe Zähigkeit und eine hohe Durchstoßfestigkeit, eine gute Verträglichkeit mit Füllstoffen und Ölen, sowie einer hervorragenden Mischbarkeit mit Polyolefinen aus.

In der praktischen Anwendung ist es wichtig, dass die Mischbarkeit der ersten, zweiten und gegebenenfalls weiteren Polymerbestandteile gewährleistet ist. Dies kann insbesondere durch Auswahl und Abstimmung der Materialparameter erfolgen, wobei auf die wichtigsten Parameter des zweiten Polymerbestandteils im Folgenden beispielhaft eingegangen wird.

Wichtige Parameter zur Beurteilung der Verarbeitbarkeit des Polymermaterials, sind Schmelzeindizes, insbesondere die Schmelze-Massefließrate (MFR) und die damit in Beziehung stehende Schmelze-Volumenfließrate (MVR). Im Zusammenhang mit der gegenständlichen Offenbarung wird unter den Begriff "Schmelze-Massefließrate" (MFR) und "Schmelze-Volumenfließrate" (MVR) der gemäß der Norm DIN EN ISO 1133 in der zum Prioritätszeitpunkt der gegenständlichen Anmeldung aktuellen Fassung ermittelte Wert bezeichnet. Der MFR wird in der Literatur und der Praxis auch als "Schmelzindex", "Melt Flow Rate", "Melt Mass-Flow Rate" oder "Melt Flow Index" (MFI) bezeichnet. Analog wird der MVR in der Literatur und in der Praxis auch als "Melt Volume Rate" oder "Melt Volume Index" (MVI) bezeichnet.

Bevorzugte Werte für die Schmelze-Massefließrate bei 2,16 kg und 190 °C des zweiten Polymerbestandteils liegen im Bereich zwischen 2 g/10 min und 15 g / 10 min.

Ein weiterer wichtiger Parameter für die Auswahl des zweiten Polymerbestandteils ist die Bruchdehnung. Die hierin für die Bruchdehnung angeführten Werte können gemäß der Norm DIN EN ISO 527 in der zum Prioritätszeitpunkt der gegenständlichen Anmeldung aktuellen Fassung ermittelt werden.

Bevorzugte Werte der Bruchdehnung des zweiten Polymerbestandteils entsprechen zumindest einem Vielfachen der Bruchdehnung des ersten Polymerbestandteils und betragen vorzugsweise mehr als 200%, insbesondere mehr als 1000 %.

Die Schmelztemperatur des zweiten Polymerbestandteils ist vorzugsweise niedriger als die Schmelztemperatur des ersten Polymerbestandteils. Die Schmelztemperatur kann dabei nach einem beliebigen Verfahren gemessen werden, solange für den ersten und den zweiten Polymerbestandteil dasselbe Verfahren verwendet wird (d.h. es ist sichergestellt, dass die Werte auf analoge Weise ermittelt und daher vergleichbar sind). Beispielsweise kann für die Ermittlung der Schmelztemperatur die Norm DIN EN ISO 3146 in der zum Prioritätszeitpunkt der gegenständlichen Anmeldung aktuellen Fassung herangezogen werden.

Bevorzugter Weise betragen die Werte der Schmelztemperatur des zweiten Polymerbestandteils weniger als 90 %, insbesondere weniger als 80 % der entsprechenden Schmelztemperatur des ersten Polymerbestandteils.

Zu den Polyolefin-Plastomeren bzw. Polyolefin-Elastomeren, die beispielsweise als zweiter Polymerbestandteil bzw. als Anteil des zweiten Polymerbestandteils verwendet werden können, zählen beispielsweise die unter den Bezeichnungen "Vistamaxx™", vertrieben von Exxon Mobil Chemical, "Versify™" und "Aplyfy™", vertrieben von The Dow Chemical Company, "Queo™", vertrieben von Borealis AG, "ESPRENE SPO™" von Sumitomo Chemical oder "Tafmer™", vertrieben von Mitsui Elastomers Singapore PTE LTD., im Handel erhältlichen Materialien. Gegebenenfalls können als zweiter Polymerbestandteil auch Kombinationen bzw. Mischungen dieser Materialien, gegebenenfalls mit weiteren Polyolefin-Plastomeren und/oder Polyolefin-Elastomeren anderer Art verwendet werden. Die gemäß der gegenständlichen Offenbarung verwendbaren Polyolefin-Plastomere und Polyolefin-Elastomeren sind auch nicht auf die derzeitig im Handel verfügbaren Produkte beschränkt, sondern umfassen alle Polyolefin-Plastomere und Polyolefin-Elastomere, die im Fachbereich bekannt sind oder sich aus den im Fachbereich bekannten Stoffen durch Parameterveränderungen, zu denen der Durchschnittsfachmann fähig ist, herstellen lassen.

Polyolefin-Plastomere beziehungsweise Polyolefin-Elastomere, die beispielsweise als zweiter Polymerbestandteil bzw. als Anteil des zweiten Polymerbestandteils verwendet werden können, sind beispielsweise auch in den folgenden Patentdokumenten offenbart:
WO 2007/115816 A1 offenbart Polyolefin-Elastomere auf Propylenbasis, die in diesem Dokument als "propylene based elastomer" bezeichnet werden. Diese weisen bis zu 95 Gew.-% einer ersten semikristallinen Polymerkomponente in der Form eines Copolymers aus Propylen und einem begrenzten Anteil an Ethylen auf.

US 2004/0236042 A1 offenbart ein Verfahren zur Herstellung von Polyolefin-Elastomeren, insbesondere von thermoplastischen Polymerzusammensetzungen mit einem überwiegenden Anteil an Propylen und einem geringeren Anteil an Ethylen.

US 7557172 B2 offenbart ein Polyolefin-Plastomer auf Ethylenbasis, welches ein Ethylen/Alpha-Olefin-Copolymer ist.

Die Inhalte der US 2004/0236042 A1, US 7557172 B2 und der WO 2007/115816 A1 werden für die Jurisdiktionen, in denen dies möglich ist, zum Inhalt der vorliegenden Beschreibung bzw. Anmeldung gemacht.

Ein höherer Anteil des zweiten Polymerbestandteils kann zwar die Verarbeitung beim Extrudieren schwieriger bzw. aufwendiger machen, jedoch wird die Siegelnahtfestigkeit der Siegelschicht 6 verbessert, insbesondere wenn diese sehr dünn ausgebildet ist. Neben der Siegelnahtfestigkeit kann durch eine Veränderung des Anteils des zweiten Polymerbestandteils auch der Berstdruck positiv beeinflusst werden.

Bei der Auswahl des Materials für den zweiten Polymerbestandteil ist zu berücksichtigen, dass der zweite Polymerbestandteil sich mit zunehmenden Maß wie ein Elastomer (d.h. gummiartig) verhält, je niedriger die Dichte ist. Dabei sinkt aber auch der Schmelzpunkt und die Klebrigkeit wird (aufgrund der Erweichung des Materials bei erhöhter Temperatur) erhöht. Dies kann zu Verarbeitungsproblemen bei der Extrusion (z. B. Kleben an der Kühlwalze) oder des fertigen Materials (z.B. Verblocken in der Rolle, Laufeigenschaften der Materialbahn) führen. Der Durchschnittsfachmann ist bei Kenntnis der hierin offenbarten Lehren von sich aus in der Lage, geeignete Materialkombinationen durch routinemäßige Arbeiten und Versuche sinnvoll auszuwählen und dabei die erwähnten Nebenbedingungen zu berücksichtigen.

Der Polymermatrix der Siegelschicht 6 können gegebenenfalls weitere Polymerbestandteile in einem Anteil von bis zu 25 Gew.-% zugesetzt sein.

Die weiteren Polymerbestandteile können insbesondere ausgewählt sein aus LLDPE (C₄, C₆, C₈), mLLDPE (C₄, C₆, C₈), Polypropylen-Homopolymer, Polypropylen-Copolymer, oder Kombinationen solcher Materialien.

Die weiteren Polymerbestandteile können etwa der Beeinflussung der Siegeleigenschaften dienen. Beispielsweise können diese auf spezielle Bechermaterialien abgestimmt werden, etwa Becher mit unterschiedlichen Anteilen an Polypropylen und/oder Polyethylen. Weiters kann es für eine Heißabfüllung (bei der bessere Hot-Tack-Eigenschaften erforderlich sind) vorteilhaft sein, den Schmelzpunkt des Siegelmaterials zu erhöhen, etwa indem als weiterer Polymerbestandteil ein C₆-Polymer verwendet wird, da dies einen höheren Schmelzpunkt hat, als etwa das LDPE des ersten Polymerbestandteils.

Die Deckschicht 7, falls eine solche vorgesehen ist, kann vorzugsweise mit einer Schichtdicke von 1 bis 3 g/m² extrudiert werden. Das Material der Deckschicht 7 ist vorzugsweise ausgewählt aus LDPE, LLDPE, mDPE, oder Kombinationen dieser Materialien.

Die Deckschicht 7 ist sehr dünn und beeinflusst daher die Siegeleigenschaften der Siegelschicht 6 zumindest in negativer Hinsicht nur unwesentlich. Das Vorsehen der Deckschicht 7 ist insbesondere verfahrenstechnisch vorteilhaft. Beispielsweise trennt die Deckschicht die Wandungen der Extrusionsdüsen von dem Material der Siegelschicht 6. Dadurch werden Ablagerungen des mineralischen Füllstoffs, insbesondere Talkablagerungen an den Extrusionsdüsen, vermieden.

In der Beschreibung und den Ansprüchen bedeutet die Ausdrücke "im Wesentlichen" oder "etwa", sofern nichts anderes an Ort und Stelle angegeben ist, eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen. Die Angabe "11 %" bedeutet somit beispielsweise: "von 9,9 % bis 12,1 %". Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Der Begriff: "Kombination" bzw. "Kombinationen" steht, sofern nichts anderes angegeben ist, für alle Arten von Kombinationen, ausgehend von zwei der betreffenden Bestandteile bis zu einer Vielzahl oder aller derartiger Bestandteile, der Begriff: "enthaltend" steht auch für "bestehend aus".

Die in den einzelnen Ausgestaltungen und Beispielen angegebenen einzelnen Merkmale und Varianten können (sofern nicht an Ort und Stelle etwas anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden.

### Bezugszeichen:

Verbundfolie 1
Aluminiumlage 2
Extrusionsschicht 3
Primerschicht 4
Haftvermittlerschicht 5
Siegelschicht 6
Deckschicht 7

## Patentansprüche

1. Verbundfolie (1), insbesondere zur Herstellung von Deckelplatinen, mit einer Aluminiumlage (2) und einer auf die Aluminiumlage (2) mehrlagig durch Coextrusion aufextrudierten Extrusionsschicht (3), wobei die Extrusionsschicht (3) eine Siegelschicht (6) und eine zwischen der Siegelschicht (6) und der Aluminiumlage (2) angeordnete Haftvermittlerschicht (5) aufweist, **dadurch gekennzeichnet, dass** die Siegelschicht (6) eine Polymermatrix mit zumindest einem ersten Polymerbestandteil und einem zweiten Polymerbestandteil aufweist, wobei der Polymermatrix der Siegelschicht (6) ein Peelkraft-Additiv, insbesondere ein mineralischer Füllstoff wie etwa Talk, zugesetzt ist, wobei der erste Polymerbestandteil ausgewählt ist aus einem Polyolefin und wobei der zweite Polymerbestandteil ausgewählt ist aus Polyolefin-Plastomeren und/oder Polyolefin-Elastomeren mit einer Dichte von jeweils unter 900 kg/m³ sowie Kombinationen solcher Materialien.

2. Verbundfolie (1) nach Anspruch 1, **dadurch gekennzeichnet, dass** der erste Polymerbestandteil aus einem Polyolefin ausgewählt ist und insbesondere Low-Density-Polyethylen ist, wobei der Anteil des ersten Polymerbestandteils an der Polymermatrix vorzugsweise zwischen etwa 30 und etwa 70 Gew.-% beträgt.

3. Verbundfolie (1) nach Anspruch 1 oder 2, **dadurch gekennzeichnet, dass** der Anteil des zweiten Polymerbestandteils an der Polymermatrix zwischen 30 und 70 Gew.-% beträgt.

4. Verbundfolie (1) nach einem der Ansprüche 1 bis 3, **dadurch gekennzeichnet, dass** die Aluminiumlage (2) aus einer bevorzugt weichen oder halbharten Aluminiumfolie mit einer Dicke von 10 µm bis 70 µm, insbesondere von 20 bis 38 µm gebildet ist.

5. Verbundfolie (1) nach einem der Ansprüche 1 bis 4, **dadurch gekennzeichnet, dass** die Extrusionsschicht (3) eine Gesamtdicke von 10 bis 18 g/m², insbesondere zwischen 10 und 15 g/m² aufweist, wobei die Dicke der Haftvermittlerschicht (5) vorzugsweise zwischen 3 und 5 g/m² beträgt und wobei die Dicke der Siegelschicht (6) vorzugsweise zwischen 6 und 10 g/m² beträgt.

6. Verbundfolie (1) nach einem der Ansprüche 1 bis 5, **dadurch gekennzeichnet, dass** die Extrusionsschicht (3) eine an die Siegelschicht (6) angrenzende, außenliegende Deckschicht (7) aufweist, die vorzugsweise eine Dicke zwischen 1 und 3 g/m² aufweist.

7. Verbundfolie (1) nach einem der Ansprüche 1 bis 6, **dadurch gekennzeichnet, dass** der zweite Polymerbestandteil Polymerkomponenten aufweist, die ausgewählt sind aus Ethylen/Propylen-Copolymer, insbesondere semikristallinem Ethylen-Propylen-Copolymer, welches vorzugsweise im Wesentlichen frei von Dienen ist, Alpha-Olefin-Copolymer, insbesondere Ethylen/Alpha-Olefin-Copolymer und/oder Propylen/Alpha-Olefin-Copolymer, Ethylen-Propylen-Dien-Elastomer, sowie Kombinationen solcher Stoffe.

8. Deckelplatine zum Verschließen eines Verpackungsbehälters, wobei die Deckelplatine aus einer Verbundfolie (1) gemäß einem der Ansprüche 1 bis 7, vorzugsweise durch Ausstanzen oder Ausschneiden, hergestellt ist.

9. Verfahren zur Herstellung einer Verbundfolie (1), insbesondere zur Herstellung von Deckelplatinen, wobei das Verfahren die folgenden Schritte aufweist:
- Bereitstellen einer Aluminiumlage (2), und
- Aufextrudieren auf die Aluminiumlage (2) einer mehrlagigen Extrusionsschicht (3) umfassend eine an die Aluminiumlage (2) angrenzende Haftvermittlerschicht und eine an die Haftvermittlerschicht (5) angrenzende Siegelschicht (6),
wobei die Siegelschicht (6) eine Polymermatrix mit zumindest einem ersten Polymerbestandteil und einem zweiten Polymerbestandteil aufweist, wobei der Polymermatrix der Siegelschicht (6) ein Peelkraft-Additiv, insbesondere ein mineralischer Füllstoff wie etwa Talk, zugesetzt ist, wobei der erste Polymerbestandteil ausgewählt wird aus einem Polyolefin und wobei der zweite Polymerbestandteil ausgewählt wird aus Polyolefin-Plastomeren und/oder Polyolefin-Elastomeren mit einer Dichte von jeweils unter 900 kg/m³ sowie Kombinationen solcher Materialien.

10. Verfahren nach Anspruch 9, **dadurch gekennzeichnet, dass** der erste Polymerbestandteil aus einem Polyolefin ausgewählt ist und insbesondere Low-Density-Polyethylen ist, wobei der Anteil des ersten Polymerbestandteils an der Polymermatrix vorzugsweise zwischen etwa 30 und etwa 70 Gew.-% beträgt.

11. Verfahren nach Anspruch 9 oder 10, **dadurch gekennzeichnet, dass** der Anteil des zweiten Polymerbestandteils an der Polymermatrix zwischen 30 und 70 Gew.-% beträgt.

12. Verfahren nach einem der Ansprüche 9 bis 11, **dadurch gekennzeichnet, dass** die Aluminiumlage (2) aus einer bevorzugt weichen oder halbharten Aluminiumfolie mit einer Dicke von 10 µm bis 70 µm, insbesondere von 20 bis 38 µm gebildet ist.

13. Verfahren nach einem der Ansprüche 9 bis 12, **dadurch gekennzeichnet, dass** die Extrusionsschicht (3) eine Gesamtdicke von 10 bis 18 g/m², insbesondere zwischen 10 und 15 g/m² aufweist, wobei die Dicke der Haftvermittlerschicht (5) vorzugsweise zwischen 3 und 5 g/m² beträgt und wobei die Dicke der Siegelschicht (6) vorzugsweise zwischen 6 und 10 g/m² beträgt.

14. Verfahren nach einem der Ansprüche 9 bis 13, **dadurch gekennzeichnet, dass** die Extrusionsschicht (3) eine an die Siegelschicht (6) angrenzende, außenliegende Deckschicht (7) aufweist, die vorzugsweise eine Dicke zwischen 1 und 3 g/m² aufweist.

15. Verfahren zur Herstellung einer Deckelplatine zum Verschließen eines Verpackungsbehälters, wobei die Deckelplatine vorzugsweise durch Ausstanzen oder Ausschneiden aus einer Verbundfolie (1) hergestellt wird, welche mit einem Verfahren gemäß einem der Ansprüche 9 bis 14 hergestellt wurde.
